(19) **Europäisches Patentamt**
**European Patent Office**
**Office européen des brevets**

(11) **EP 1 914 668 A1**

(12) **EUROPEAN PATENT APPLICATION**

(43) Date of publication:
**23.04.2008 Bulletin 2008/17**

(51) Int Cl.:
**G06K 15/10** (2006.01)    **B41J 2/21** (2006.01)

(21) Application number: **06122346.7**

(22) Date of filing: **16.10.2006**

<table>
<tr><td>

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Agfa Graphics N.V.**
**2640 Mortsel (BE)**

</td><td>

(72) Inventor: **Vanhooydonck, Rudi**
**AGFA-GEVAERT**
**2640, Mortsel (BE)**

(74) Representative: **Goedeweeck, Rudi et al**
**Agfa Graphics N.V.**
**IP Department 3622**
**Septestraat 27**
**2640 Mortsel (BE)**

</td></tr>
</table>

(54) **Image processing method and apparatus for improving image quality in dot matrix printer**

(57)    Ink coalescence in inkjet printing is reduced by printing mutually interstitial images. The mutually interstitial images have pixels lined up along diagonal lines. The printing order of the interstitial images is optimized to reduce correlated image artifacts such as banding.

Figure 13

EP 1 914 668 A1

**Description**

FIELD OF THE INVENTION

The present invention relates to an image processing method and system.

More specifically, the invention relates to an image processing method and system for improving image quality in dot matrix printing systems, such as inkjet printers.

More specifically, the invention relates to a method for improving image quality in such systems by printing mutually interstitial sub-images, for example by interlacing or interleaving such sub-images.

BACKGROUND OF THE INVENTION

Printing a digital document is one of the most efficient ways to convey information to a user. New print-on-demand technologies such as laser printing and inkjet printing enable to print documents almost instantaneously without the need for creating intermediate printing masters.

Inkjet printing works by jetting ink droplets through a nozzle onto a substrate.

In the case of continuous inkjet, a continuous stream of electrically charged ink droplets is produced and electromagnetic fields are used to guide this stream away from or towards a substrate as to form an image on said substrate.

In the case of drop-on-demand inkjet, a mechanical or thermal energy pulse is applied to ink residing in a small chamber in order to create a pressure wave that propels a miniscule ink droplet at high speed through the nozzle towards a substrate. The pressure wave is controlled by shaping the length and the profile of the electrical waveform that is applied to the thermal or mechanical transducer in the ink chamber. In many cases the volume of the droplet and the size of the ink spot are substantially fixed. In other cases the volume of the droplet can be modulated to create ink spots having different sizes on the substrate.

Printing the image of a document is achieved by moving the nozzle relative to the substrate along a raster by means of a shuttle in combination with a substrate transport mechanism and selectively jetting ink droplets on a substrate in response to the image of said document.

When the ink droplets land on a substrate, they form ink spots. Because these ink spots are small, they cannot be individually resolved by the human visual system but together they render a visual impression of the image of the printed document. Generally, a halftoning technique is used to determine the spatial distribution of ink spots that produces an optimal rendering of the image of a given document.

To increase printing speed usually not one but an array of nbrNozzles inkjet nozzles are generally used that can be operated in parallel. Such an array of nozzles makes up a print head.

By moving the shuttle with the print head across the substrate in a fast scan orientation, a set of parallel raster lines of pixels can be printed in one step. Such a set of raster lines is called a swath.

When a swath has been printed, the print head is moved in a slow scan direction over a distance of the length of the array of nozzles to print an additional swath of lines underneath said previous swath. This process of printing swaths is repeated until a complete document is printed on the substrate.

The smallest value for the nozzle pitch is practically limited by constraints imposed by the manufacturing process. For reasons of image quality, however, a printing pitch in the slow scan direction is often desired that is smaller than the nozzle pitch. The document US 4.198.642 teaches that a value can be selected for the printing pitch in the slow scan orientation that is an integer fraction 1/n of the nozzle pitch by using an interlacing technique.

Because of manufacturing tolerances, systematic variations between nozzles belonging to the same inkjet head exist of the volume of droplets and of both their ejection velocity and direction. If all the ink droplets of a single line of pixels in the fast-scan orientation are printed by the same nozzle, the variations in the ejection direction across the slow-scan orientation show up as correlated image artifacts that look like banding or streaking.

The document US 4,967,203 introduces a technique to resolve this problem. By having the pixels on one and the same line printed by different nozzles instead of by the same nozzle, the correlated image quality artifacts can be de-correlated. The underlying assumption is that the image quality artifacts caused by variations between different nozzles are uncorrelated. De-correlating the image quality artifacts diffuses them over the printed substrate so that they become less perceptible or preferably imperceptible. In many documents, this technique is referred to as shingling. The method presented in US 4,967,203 uses a staggered application of ink dots such that overlapping ink dots are printed in successive passes of the print head.

In US 6,679,583 an improved technique is presented that combines the effects of the teachings in US 4,198,642 and US 4,967,203 and adds a number of other improvements, including improved printing speed. In this document, the term mutually interstitial printing is introduced to describe both interlacing and shingling. The term mutually interstitial printing also avoids confusion, as the term shingling is preferably used in the graphic arts industry to describe a technique that compensates for the effects of the thickness of the paper on the width of the margin in saddle-stitched bookmaking.

Once an ink droplet ejected by a nozzle lands on a substrate, it is being cured so that it receives the required resistance against rubbing. Ink curing can be achieved by a number of mechanisms.

A first mechanism of ink curing is absorption of the ink into fibers of the substrate or a porous coating. This is the dominant mechanism when oil or water based inks are used.

A second mechanism of ink curing is coagulation of the ink by evaporation of an ink solvent. When the ink solvent has evaporated, pigments or dyes together with a binder material are left on the paper.

In many practical applications, a combination of the two above effects takes place: ink is initially absorbed by a substrate and then, depending on the vapor pressure of the solvent, evaporates in a shorter of longer time.

A third mechanism of ink curing is polymerization, for example under the influence of an external energy source such as a UV light source. The high-energy radiation creates free radicals that initiate a polymerization reaction that solidifies the ink. The main advantage of this technique is that it enables the printing on media that do not absorb ink.

A fourth mechanism of ink curing is phase or viscosity change by temperature. Ink is jetted at a high temperature when it is in liquid phase and solidifies when it cools down on the printed surface.

An objective technical problem exists in inkjet printing when the ink spots from different droplets on the substrate touch each other before they are cured. Because of complex physical effects related to surface tension, the touching ink spots may coalesce. This coalescence results in a mottled appearance of tints that are printed. The effect is most pronounced in tints with a high density, because in these tints, the average distance between the spots is shorter and the risk that neighboring ink spots touch is higher.

The problem of coalescence becomes worse in the case of so-called wet-on-wet printing. Wet-on-wet printing is a technique wherein the droplets from different nozzles land on the same position of the substrate without intermediate curing. A typical example is in color printing where up to four droplets with cyan, magenta, yellow and black ink printed by different heads mounted on the same shuttle can land on the same pixel position. An advantage of wet-on-wet printing is that the final color of a pixel is not heavily affected by the order of printing the droplets because the inks physically mix before they are cured. This property is particularly advantageous in the case of bidirectional printing, because in bidirectional printing the order of printing droplets by different heads reverses when the slow scan direction reverses. However, the piling up of droplets on the same position on the substrate also greatly increases the risk for coalescence.

A first solution to the problem of coalescence problem would be to reduce printing speed. By reducing printing speed more time is available to cure an ink spot before a neighboring ink spot is printed and this reduces the risk of coalescence.

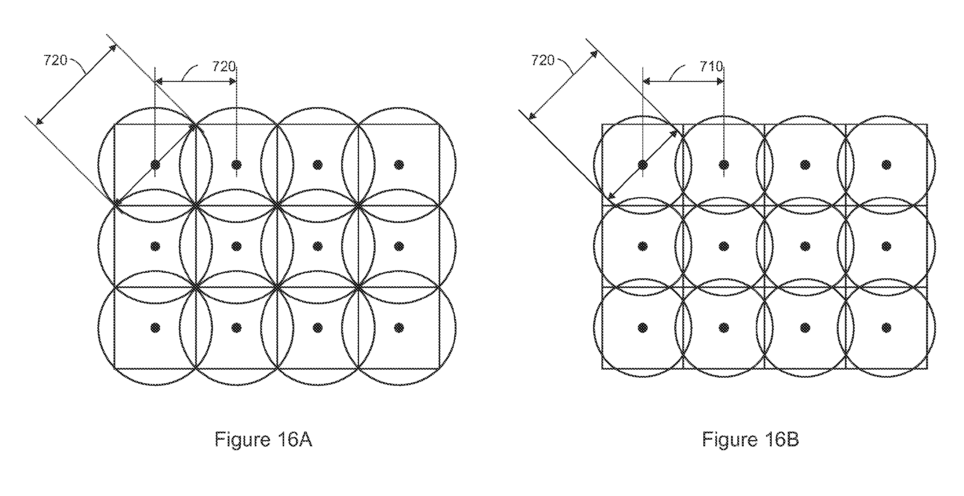

Reducing the printing speed, however, also increases the waiting time for a printed result and negatively affects the productivity of the inkjet printer, i.e. the economic value that the investment in the printer can create over its lifespan. Another solution would be to increase the distance between the ink spots by making them smaller or by decreasing the resolution of the addressable grid of printable dot positions. This solution however negatively impacts the density that can be achieved when a dot is printed at 100% of the printable dot positions. The comparison between the Figure 16A and 16B shows that when the ratio of the diameter spotDiameter 420 of an ink spot divided by the shortest distance pixelSize 410 between two printable positions becomes smaller than the square root of two, areas between the spots are left on the substrate that receive no ink. These areas negatively impact the density of the darkest tint that can be achieved with this system.

Yet another solution would be to change the order of the droplet printing. By printing neighboring pixels at different times, the pixels that are printed first can already be cured before the remaining pixels are filled in. This effect is implicitly achieved when the technique is used that is described in US 4,967,203. Because different sets of pixels on the same line are printed during different swaths, there is time to cure a set of pixels printed during an earlier swath before a set of pixels of a later swath are deposited. By spreading the deposition of neighboring ink droplets in time, coalescence is reduced and at the same time, correlated image artifacts are diffused. The method is effective at moderate printing speeds. When higher printing speeds are required, however, the method fails to avoid the occurrence of coalescence.

Yet another solution would be to force the curing of ink droplets when they land on the substrate before additional droplets are printed at nearby pixel positions. This would for example be achieved by using a UV curable ink and a UV source that is mounted on the same shuttle and that follows the print head. The document patent US 6,092,890 discloses an apparatus that uses a set of print heads for ejecting UV curable ink droplets in combination with a single UV source associated with said set of print heads for curing the inks by hardening or solidifying the ink drops on the receiver. This improves the problem of coalescence but introduces another problem. Hardening the ink drops on the receiver immediately after they are printed results in a surface that becomes microscopically "bumped" in an image-wise fashion. Another effect is that when an ink droplet during a subsequent pass lands at or near a cured ink spot, it tends to spread in a completely different way than when the same droplet would land on a wet droplet or on an unprinted substrate. The result is an image with an uneven gloss and texture. What is really needed is a system that results in even gloss and smooth texture of a printed document. Another problem with the disclosure in the document patent US 6,092,890 is that it provides no clear explanation of the printing method itself. It is not clear, for example, whether in one pass of the print heads one or more inks are deposited at the same time or not. Furthermore, since only a single UV source is used, the apparatus is designed to print only in one direction along the fast scan orientation, which lowers the maximum achievable printing performance compared to systems that support bidirectional printing.

The document WO2004/002746 describes a method and an apparatus and introduces the concept of a first "partial curing" step by a first UV source followed by "final curing" step by a second UV source. The image is reconstructed by printing series of mutually interstitial images with intermediate curing. The partial curing of each mutually interstitial image immediately after printing enables to control the coalescence of ink without substantially compromising the smoothness of the gloss and texture of the final printed surface. Because the method and the apparatus in the document WO2004/002746 use only one UV lamp for the intermediate curing, they are designed for printing only in one direction along the fast scan orientation, which limits the maximum achievable printing performance compared to systems that support bidirectional printing.

Bidirectional printing has been described in the prior art, however not in the context of printing techniques that use intermediate curing. Many technical problems that involve the management of printing and curing, the lay out of an apparatus for such purpose, and the required image processing to suppress correlated image artifacts and to achieve a smooth and even gloss and texture of the printed result hence remain unresolved.

In view of the state of the art an improved and alternative method and apparatus are needed for dot matrix printing that suppresses coalescence, supports the printing with UV curable inks, optimizes printing performance, supports bidirectional printing, suppresses correlated image artifacts and results in an even gloss and smooth texture of the printed result.

SUMMARY OF THE INVENTION

The above-mentioned advantageous effects are realized by a method and a system having the specific features set out in claim 1 and the other independent claims.

By sub-sampling an original image according to a checkerboard pattern, halftoning said sub-sampled image, separating said halftoned sub-sampled image into sub-images along a diagonal orientation and printing on a given line first all the pixels belonging to a first sub-image, before printing on said line pixels belonging to another sub-image, coalescence is effectively suppressed.

By using an arrangement of multiple printing heads and multiple curing stations that enable the printing of multiple sub-images in one single pass along a fast scan direction, printing speed is increased.

Preferred embodiments of the invention are set out in the dependent claims.

Further advantages and embodiments of the present invention will become apparent from the following description and drawings.

BRIEF DESCRIPTION OF THE DRAWINGS

Figure 1 shows a dot matrix printer according to one of the embodiments of the current invention;

Figure 2 shows a diagram of a printer controller;

Figure 3 shows a data processing system to drive a printer controller;

Figure 4 shows an addressable print grid having pixels and characterized by slows scan pitch and a fast scan pitch;

Figure 5 shows a dot matrix print head having multiple nozzles;

Figure 6 shows a print head having multiple nozzles that are being organized in two staggered columns of nozzles;

Figure 7 shows a print head assembly having four print heads and two curing sources;

Figure 8 shows an embodiment of the current invention wherein an image is sub-sampled;

Figure 9 shows an embodiment of the current invention in which a sub-sampled image that has been derived from an original image having a resolution in the fast scan orientation that is half the resolution in said slows scan orientation of the addressable printer grid.

Figures 10A, 10B and 10C show a preferred embodiment of the current invention, in which a sub-sampled image is separated in a primary series of two sub-images, with each one of said sub-images being separated into a secondary series of two sub-images;

Figures 11A, 11B and 11C show an embodiment of the current invention, in which a sub-sampled image is separated in a primary series of three sub-images, with each one of said sub-images being separated a secondary series of two sub-images;

Figure 12 shows a first embodiment of the current invention that demonstrates the order in which four sub-images can be printed in different swaths;

Figure 13 shows a second embodiment of the current invention that demonstrates the order in which four sub-images can be printed in different swaths;

Figure 14 shows a preferred embodiment of the current invention that demonstrates the order in which four sub-images can be printed in different swaths;

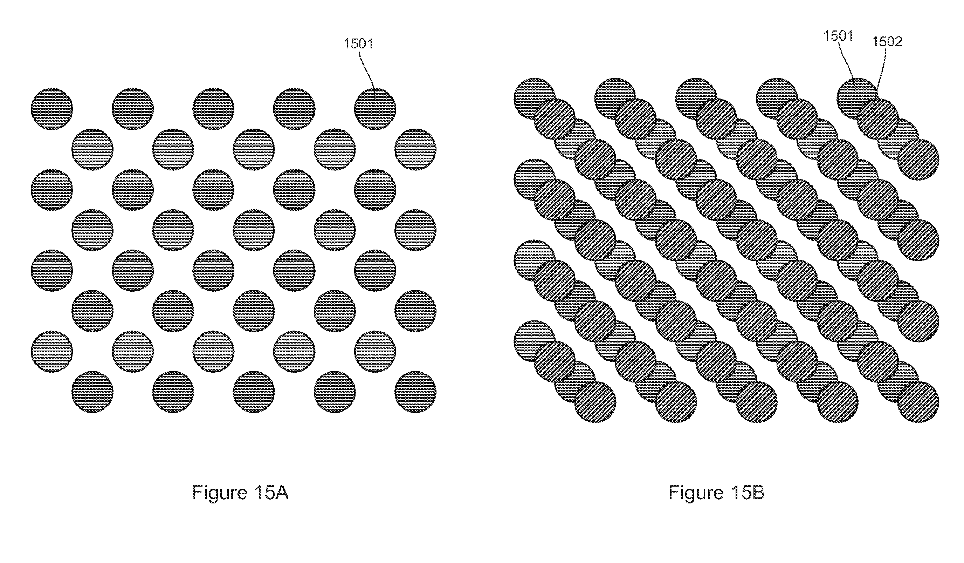

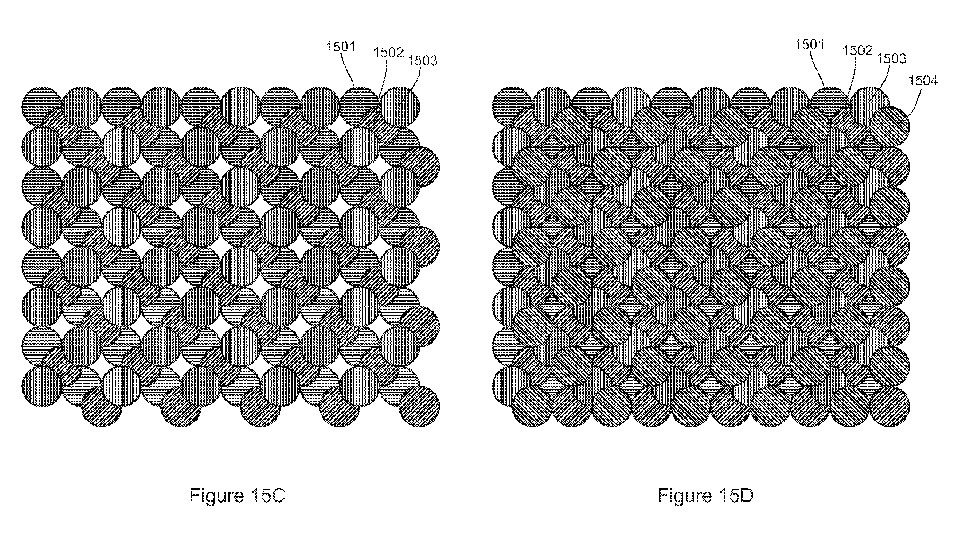

Figure 15 shows the dot patterns that are obtained by the subsequent printing of four sub-images according to a preferred embodiment;

Figure 16 shows that a minimum dot size is needed in relation to the pitch of an addressable printer grid to achieve complete coverage of printed substrate.

Figure 17 shows a print head assembly having two sets four print heads and three curing sources.

Figure 18 shows a print head assembly having multiple sets of print heads and multiple curing sources.

Figure 19 shows a print head assembly having multiple sets of print heads and multiple curing sources.

Figure 20 shows a first embodiment of an additional slow scan step.

Figure 21 shows a second embodiment of an additional slow scan step.

DETAILED DESCRIPTION OF THE INVENTION

Description of the apparatus

printing

The method according to the current invention is mainly directed towards the use in dot matrix printers and specifically drop-on-demand inkjet printers, but it is not limited thereto. The term printing as used in the invention refers to the process of creating a structured pattern of ink markings on a substrate. Non-impact printing methods are preferred but the present invention is not limited thereto.

ink

The ink could be a conventional pigmented or dyed ink or colorant, but it could also be wax, a water repellent substance, an adhesive or a plastic. Usually ink is not a pure compound, but a complex mixture comprising several components such as dyes, pigments, surfactants, binders, fillers, solvents, water and dispersants, each component serving a specific function. The ink could also be a material of which the viscosity or phase changes with temperature, such as wax. Specifically mentioned also are inks that polymerize, for example under influence of electromagnetic radiation such as UV light. This process is called curing.

substrate

The substrate could be paper, but it could also be textile, a synthetic foil or a metal plate. Examples of printing processes include inkjet printing (drop-on-demand and continuous), thermal wax or dye transfer printing and the use of inkjet to create printing masters for offset printing.

### print head and shuttle transport

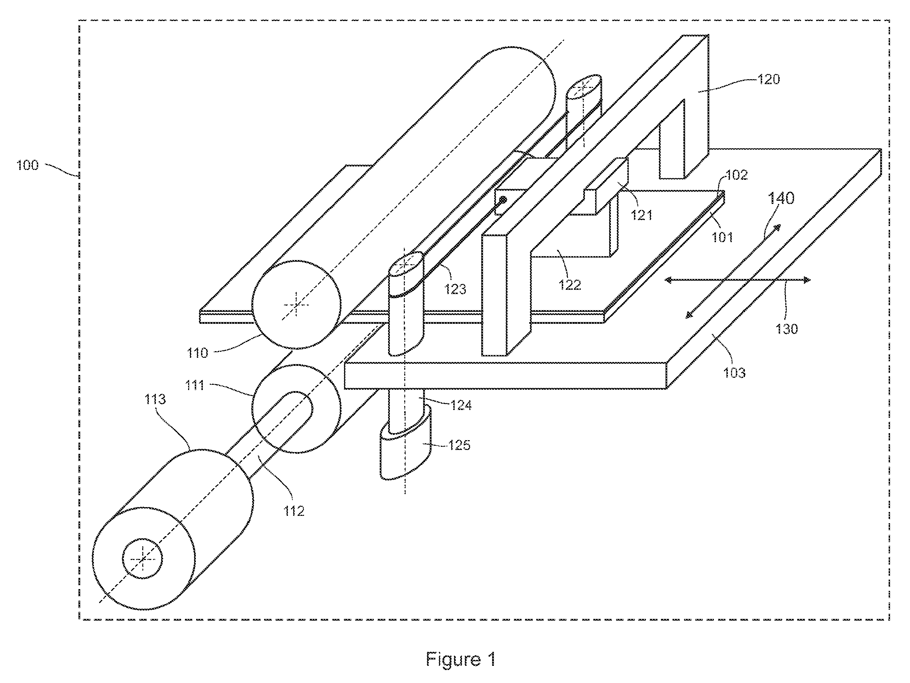

Referring to one specific embodiment shown in Figure 1, a transducer, an ink chamber and a nozzle - etched in a nozzle plate - together make up a print head 122. Such a print head 122 is mounted on a shuttle 121 that is capable to travel on a guide 120. The shuttle transport is achieved by means of a belt 123, a shaft 124 and a first motor 125.

### substrate transport

In the same embodiment a substrate 101 having an ink receiving layer 102 rests on a substrate support 103 and is transported by a substrate transport mechanism comprising two rollers 110,111, a shaft 112 and a second motor 113.

### printing revisited

Printing an image of a document using a printer 100 is generally achieved by moving a nozzle relative to a substrate by means of the shuttle and the substrate transport mechanisms and selectively jetting ink droplets on a substrate in response to said image of said document.

### fast scan and slow scan orientation and direction

The orientation that corresponds with the movement of a shuttle along its guide is generally called the fast scan orientation 140. The fast scan direction shall mean the direction that said shuttle moves along said fast scan orientation. The orientation perpendicular to the fast scan orientation is generally called the slow scan orientation 130. The slow scan direction shall mean the direction that a print head moves along said slow scan orientation relative to the substrate.
A raster line shall mean a virtual line on which ink droplets are printed by a nozzle along a fast scan orientation.

### bidirectional printing

In order to reduce idle time of the nozzle when the shuttle returns, printing is preferably done bidirectionally, i.e. printing occurs in the two directions corresponding to the fast scan orientation.

### addressable grid of pixels

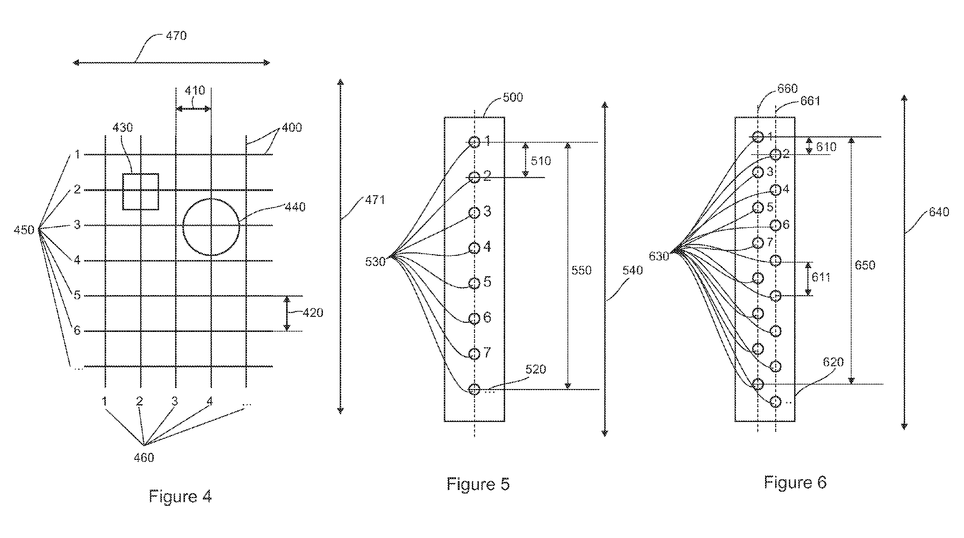

Referring to Figure 4, the rectangular raster grid that is defined by the positions where a droplet can be printed is called the addressable grid 400. An element of the addressable grid is a pixel 430. The pixels are arranged in rows addressed by a slow scan index 450 and columns addressed by a fast scan index 460. With one pixel is associated a color or a set of colorant values. The color can be monochrome or full color (three color components, for example expressed as the amounts of red, green blue primaries). The set of colorant values can for example be amounts or densities of cyan, magenta, yellow and black colorants.
The distance between two neighboring pixels on along the fast scan orientation 470 is called the fast scan pitch fastScanPitch 410, while the distance between two neighboring pixels along the slow scan direction 471 is called the slow scan pitch slowScanPitch 420.
A relation exists between the pitch in the fast and slow scan orientation and the spatial resolution of a printer.
The fast scan pitch fastScanPitch and the fast scan printing resolution fastScanResolution are related to each other by an inverse relationship:

$$fastScanResolution = 1/fastScanPitch.$$

The same is true for the relation between the slowScanResolution and the slowScanPitch:

$$slowScanResolution = 1/slowScanPitch.$$

A smaller pitch (or a higher spatial resolution) enables the rendering of finer image details and hence in general enables to achieve a higher image quality.
For a constant speed fastScanVelocity of the print head in the fast scan direction, the printing resolution fastScanResolution is proportional with the firing frequency firingFrequency of the nozzles, i.e. the time rate at which ink droplets can be ejected by a nozzle. Hence the fast scan resolution fastScanResolution is dictated by the ratio of the firing frequency firingFrequency divided by the velocity fastScanVelocity in the fast scan direction:

fastScanResolution=firingFrequency/fastScanVelocity

array of nozzles

Referring to the preferred embodiment shown in Figure 5, not one but an array 500 of nbrNozzles 520 inkjet nozzles can be used that operate in parallel and that produce droplets with either a fixed or a variable volume.

Each nozzle can be referred to by means of a nozzle index nozzleIndex that ranges from 1 to nbrNozzles. In general the nozzle array 500 is oriented parallel to the slow scan orientation 540 although this is not a strict requirement. The shortest distance between two nozzles along the slow scan orientation 540 is called the nozzle pitch nozzlePitch 510. The length of the nozzle array headLength 550 is expressed as a multiple of the length of slowScanPitch. A set of rows of pixels on the addressable grid that can be addressed by the nozzles of a print head during one movement along the fast scan orientation is called a swath.

Referring to Figure 6, the nozzles 630 of an array may be staggered for constructive reasons along two or more columns 660, 661. In that case the nozzle pitch 610 is defined as the shortest distance between two lines perpendicular to the slow scan orientation and going to the centers of the staggered nozzles. In the case of staggered arrays of nozzles, the timing of the firing of droplets from nozzles belonging to different columns is preferably adjusted so that the pixels belonging to the same column in the image of the document also land on the same column on the printed image. By adjusting the timing this way, the processing to prepare the signals for the nozzles can be the same as if all the nozzles were virtually on the same column.

According to one preferred embodiment, two staggered columns are used each having 382 nozzles. According to the same embodiment the distance 611 between two nozzles in one column is 141 micrometer (1 inch/180) and the nozzle pitch 610 is 70,6 micrometer (1 inch/360).

According to a preferred embodiment, the printing resolution in the slow scan orientation is increased by using one of the interlacing techniques as known in the art. Specifically the resolution in the slow scan orientation can be doubled by using a slow scan interstitial factor equal to two. This brings the slow scan pitch to a value of 35,3 micrometer (1 inch/720). According to one embodiment, the value of fastScanVelocity is adjusted so that value of the fast scan pitch is equal to that of the slow scan pitch.

According to a preferred embodiment of the current invention, not one but a set of print heads are used that print with different inks. In general, the inks have different hues but in one embodiment, they have the same hue but different densities, such as for example a light and dark cyan, or a light and dark neutral color. In one embodiment a set of four print heads are used to print with four inks having cyan (C), magenta (M), yellow (Y) and black (K) colors. In one embodiment, these inks are curable by electromagnetic radiation such as UV light.

The different print heads can be mounted near or below each other, or in a staggered fashion relative to each other. According to the preferred embodiment, the values of the nozzle pitch of the different print heads are the same and the heads are mounted in such a way that the nozzles are spaced at an integer multiple of the slow scan pitch along the slow scan orientation. The timing of the firing of the droplets belonging to different print heads is preferably adjusted so that they the droplets that belong to the same column in the image also land on the same column on the printed image.

Because the droplets from the different print heads that land on the same pixel position are printed during the same swath, little time passes between the printings of these droplets. This implies that the inks spots from the different droplets can physically mix. This technique of jetting subsequent droplets without intermediate curing is called wet-on-wet printing

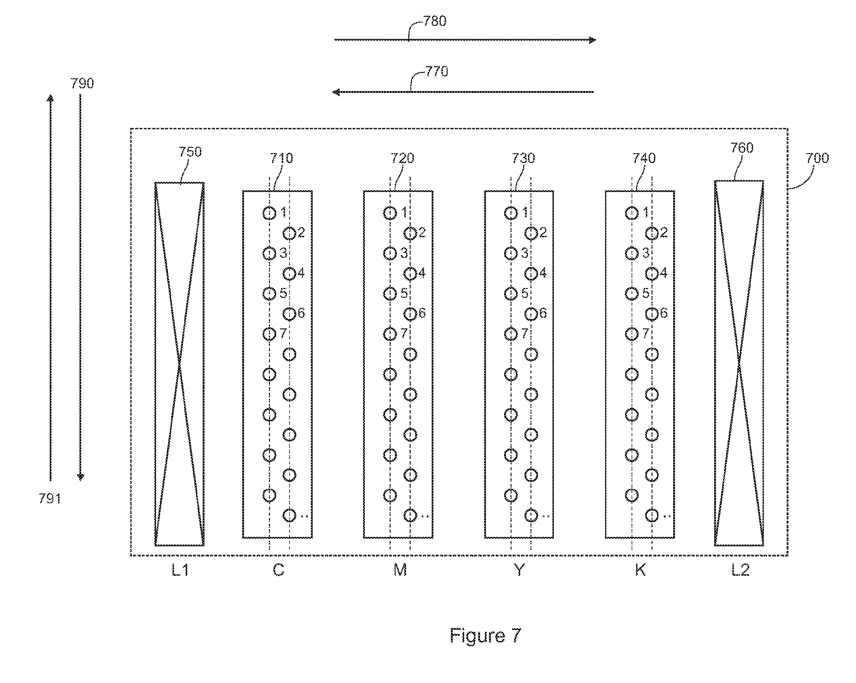

According to one embodiment, Figure 7 also shows two optional curing sources L1 750 and L2 760. These sources are designed to boost the curing of the ink. An example could be the use of a UV curable ink in combination with UV lamps that enhance polymerization of the ink.

Another example could be an IR source that enhances drying of the ink. According to a preferred embodiment the output power of the sources can be controlled by the printer controller, for example by controlling the amplitude or the duty cycle of the current passing through the lamps or by controlling the number of lamps in the same source that are simultaneously powered.

The print heads 710, 720, 730, 740 and the curing sources 750, 760 together make up a print head assembly 700.

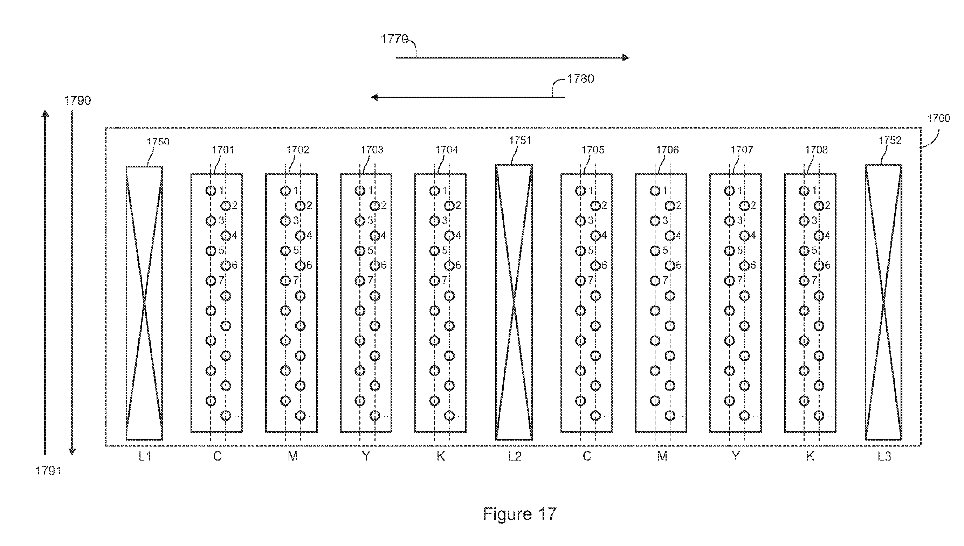

According to an embodiment shown in Figure 17, multiple curing sources L1 1750, L2 1751 and L3 1752 are used. In between the sources L1 1750 and L2 1751 a first set of print heads 1701-1704 is provided and between the sources L2 1751 and L3 1753 a second set of print heads 1705-1708 is provided. The light sources L1 1750, L2 1751 and L3 1752 and the print heads 1701-1708 together make up a print head assembly 1700.

According to a preferred embodiment and referring to Figure 17, the nozzles of all the heads are shifted along a slow scan orientation 1790, 1791 axis so that nozzles belonging to different heads 1702, 1703 but having the same nozzle index print on the same raster line during the same swath. According to another embodiment, the nozzles of all at least two heads 1703, 1704 are shifted along a slow scan orientation 1790, 1791 axis so that nozzles belonging to different heads 1703, 1704 but having the same nozzle index print on a different raster line during the same swath.

The embodiment shown in Figure 17 comprises twice the number of heads compared to the arrangement shown in Figure 7 and therefore enables to achieve faster printing speed. If printing performance needs to be further enhanced, more curing sources and more print heads can be mounted along the fast scan orientation 1780, 1781.

According to one preferred embodiment and referring to Figure 17, the output power of the sources is controlled by a printer controller, for example by controlling the amplitude or the duty cycle of the current passing through the lamps or by controlling the number of lamps in the same source that are simultaneously powered.

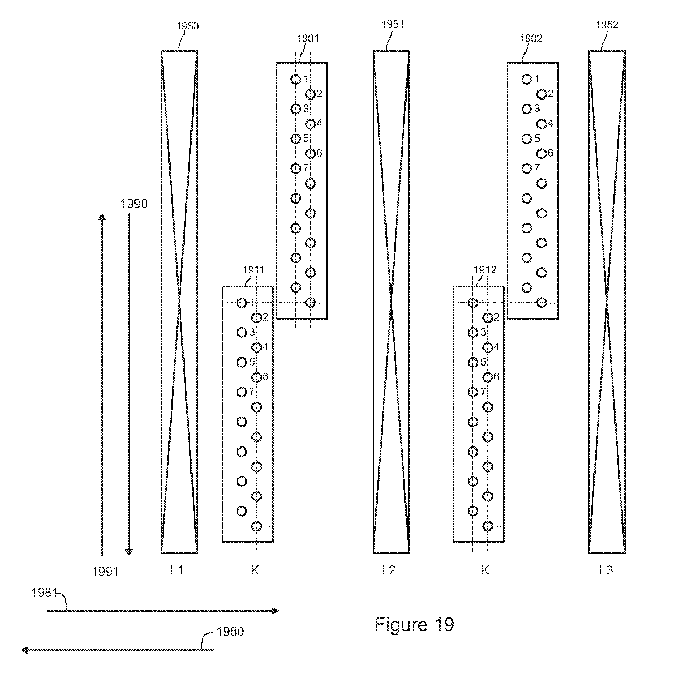

Figure 19 shows an embodiment featuring multiple curing stations 1950, 1951, 1952, multiple heads 1901, 1902 along a fast scan orientation 1980, 1981 and multiple heads 1901, 1919 along a slow scan orientation 1990, 1991. According to the embodiment in Figure 19, the heads 1901, 1911 are staggered. By adjusting the timing of the drivers of the staggered print heads so that a single contiguous line of pixels in the halftone image that is parallel to the slow scan orientation is also printed as a single contiguous line, the staggered print heads effectively behave as one long single print head. Using plural heads 1901, 1911 along a slow scan orientation increases the number of nozzles that can print simultaneously during a swath and therefore increases printing performance.

Unfortunately, a staggered arrangement of print heads results in an increased size of the print head assembly 1900 along a fast scan orientation 1980, 1981 and correspondingly an increased weight. This increased weight results in increased acceleration and deceleration forces when the print head assembly switches direction in the fast scan orientation and therefore complicates the mechanical design.

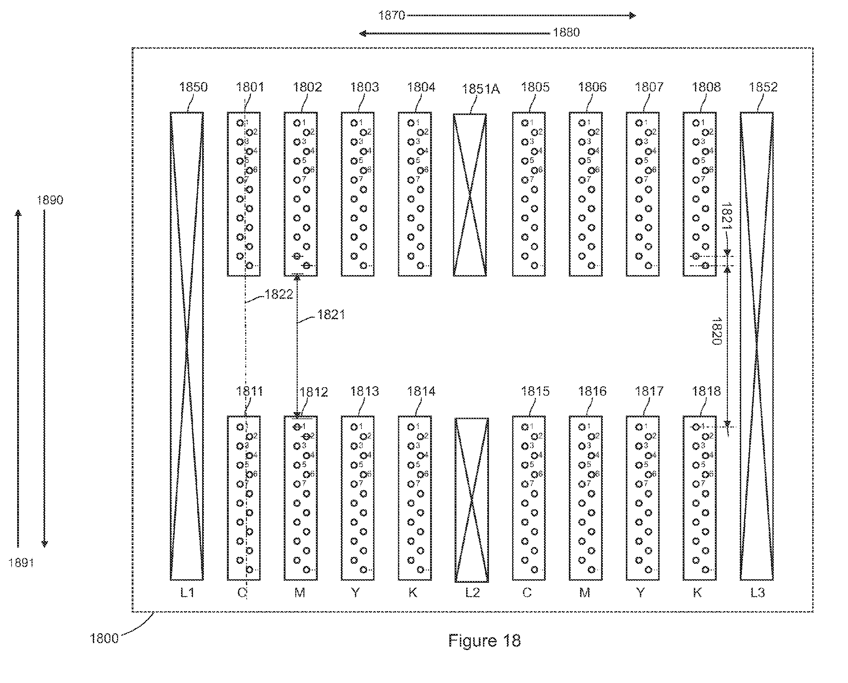

Therefore, according to a preferred embodiment shown in Figure 18, the multiple print heads 1801, 1811 are essentially lined up along a line 1822 parallel to the slow scan orientation 1890, 1891. Preferably, the print heads 1808, 1818 are mounted at a distance relative to each other so that a distance 1820 between two nozzles belonging to different heads 1808, 1818 is a multiple of the slow scan pitch 1821. An advantage of this embodiment is that the total size of the print head assembly 1800 along a fast scan orientation 1880, 1881 and the corresponding weight of such a unit can be minimized.

A disadvantage is that in the arrangement shown in Figure 18, a gap 1821 exists between the two heads 1808, 1818 where no printing occurs. This technical problem is resolved using image processing.

In one embodiment of the current invention, the distance 1821 between two print heads 1808, 1818 is nbrNozzles times the nozzlePitch 1821. In another embodiment of the current invention, the distance 1821 between two print heads 1808, 1818 is smaller than nbrNozzles times nozzlePitch but equal to a multiple of the nozzlePitch 1820. In the remainder of the text, the term gapSize is used to refer to the distance 1821.

In one embodiment, at least one of the curing stations 1851 is split into two curing stations 1851A, 1851B.

computer system

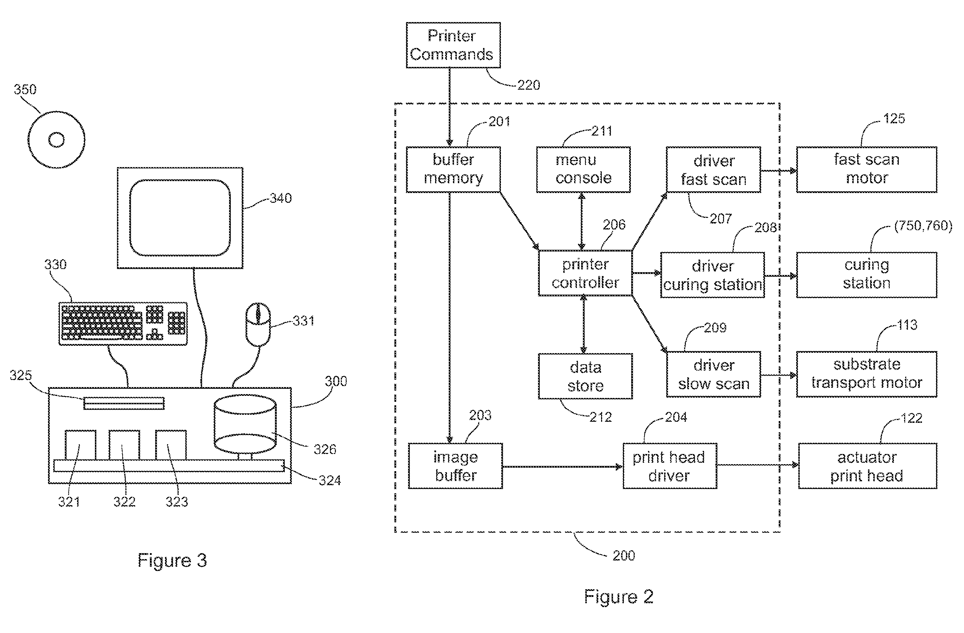

According to a preferred embodiment and referring to Figure 3, printer commands are generated from a data processing system 300 such as a computer. A computer comprises a network connection means 321, a central processing unit 322 and memory means 323 which are all connected through a computer bus 324. The computer typically also has a computer human interface 330, 331 for inputting data and a computer human interface 340 for outputting data. According to one embodiment, the computer program code is stored on a computer readable medium such as a mass storage device 326 or a portable data carrier 350 which is read by means of a portable data carrier reading means 325.

printer controller

Referring to Figure 2, the fast scan motor 125, the slow scan motor 113 and the actuator of the print head 122 are controlled by a printer controller 200. Printer commands 220 are received by a buffer memory 201. These printer commands contain printer controller information which is sent to a printer controller 206 and image data which is sent to an image buffer 203. The printer controller controls a fast scan driver 207 that drives the fast scan motor 125 for moving the shuttle in a fast scan direction. The printer controller also controls a slow scan driver 209 that drives the slow scan motor 113. In case the printer has also a curing station, as in the preferred embodiment, the controller also comprises a driver for the curing station 750,760. The information in the image buffer 203 is used to drive the actuator(s) of the print head 122 by means of a print head driver 204.

Description of the method

Raster image processing

According to a preferred embodiment, a first step of printing the image of a document includes calculating a continuous tone raster image of said document at the printer's spatial resolution and in the printer's colorant space.

This process involves the transformation of a document, usually represented at the object level in one of the standardized formats such as PDF®, MS-Word®, or PostScript ®, into a continuous tone raster image.

Such a continuous tone raster image contains for every addressable position of the printer grid a pixel value representing on a near-continuous tone scale the amount of ink that belongs to that pixel position.

According to a preferred embodiment, the calculations are done on a computer system 300 by means of a computer program such as "Adobe PostScript Printer Driver" commercialized by the company Adobe Systems Incorporated, located in San Jose CA.

sub-sampling

According to said preferred embodiment, a second step comprises sub-sampling said continuous tone image.

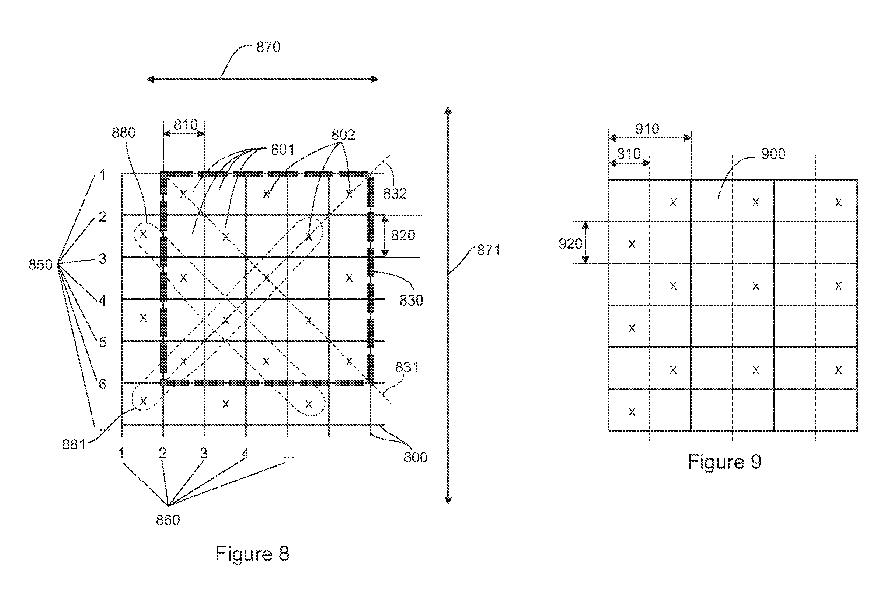

This is explained by means of Figure 8. Every square 801 corresponds with a pixel at the full printer resolution. The fast scan pitch fastScanPitch 810 and slow scan pitch slowScanPitch 820 are in this particular example are identical. The sub-sampling consists of retaining pixel values only at the positions indicated with an x-mark 802. The pixels in the resulting sub-sampled image are spatially laid out on a grid that in this case is 45 degrees rotated with regard to the addressable grid of the printer and form a checkerboard pattern and that contains half of the pixels as the original image.

In a more general situation, the positions 802 of the pixels in the sub-sampled image are defined by first identifying two diagonal orientations that correspond with the diagonal lines of any rectangular cell 830 on the addressable grid 800 that contains the same number of pixels NP (NP>1) in the fast and slow scan orientations. In the remainder of the text, the orientations of said two diagonal lines are referred to as a first diagonal orientation 831 and a second diagonal orientation 832.

Said sub-sampled image is then defined as the set of one out of every two pixels 801 on every row 850 of the addressable printer grid 800, arranged in such a way that they form contiguous series 880, 881 of pixels 802 along said two diagonal orientations 831,832.

Sub-sampling techniques, often referred to as decimation techniques, are known to the person skilled in the art.

According to one preferred embodiment, sub-sampling is performed by simply selecting the pixel values in the continuous tone raster image that correspond with the position of pixels in the sub-sampled image.

According to another embodiment, first a low pass filter is applied on the continuous tone raster image, after which the pixel values are selected in said filtered image that correspond with the positions in the sub-sampled image.

digital halftoning

Because the tonal resolution of the pixel values in the continuous tone raster image is higher than the tonal resolution of the printer, a third, digital halftoning step is required according to said preferred embodiment. For example, the pixels in the continuous tone raster image or the sub-sampled image may be represented with 8 bits per colorant component, while the printer many only be able to print four distinct tone levels represented by 2 bits per colorant component. The task of the digital halftoning step is spatially diffusing the image artifacts that result from the quantization of the pixels from eight to two bits per color component. The result of halftoning a sub-sampled continuous tone raster image is a halftoned sub-sampled image. Digital halftoning techniques have been known to the person skilled in the art. Examples include error diffusion or a threshold mask based frequency modulation techniques.

preferred embodiment for steps 1-3

According to a preferred embodiment, the steps of calculating a continuous tone raster image of said document, sub-sampling said image and halftoning said sub-sampled image can be optimized for performance and memory usage. According to Figure 9, the continuous tone raster image is first calculated at half the printer resolution in the fast scan orientation and at the full printer resolution in the slow scan orientation. Figure 9 shows that the pitch 910 of the continuous tone raster image in the fast scan direction is two times larger than the pitch 810 of the addressable grid of the printer. This continuous tone image can be halftoned using one of the techniques known by the person skilled in the art such as error diffusion or a threshold mask based frequency modulation technique. In a next step, the pixels of the halftoned image are mapped to the pixels of the addressable grid of the printer at the positions indicated with an x-mark in Figure 9. This mapping is achieved by using the following rule set that maps a pixel of the halftoned image having row index [i] and column index [j] onto a pixel of the addressable printer grid having row index [k] and column index [1]:

```
if [i] is odd
    than k=i and l=2*j+1;
else
    k=i and l=2*j;
```

An equivalent variation of said rule is:

```
if [i] is even
    than k=i and l=2*j+1;
else
    k=i and l=2*j;
```

It should be clear to the person skilled in the art that an equivalent alternative consists of starting from a continuous tone image at half the printer resolution in the slow scan direction and at the full resolution in the fast scan direction.

The above combined approach for raster image processing, sub-sampling and halftoning is particularly efficient, as it requires the calculation of a continuous tone raster image having only half the number of pixels compared to the full resolution raster image and does not involve sophisticated decimation techniques. In addition standard halftoning techniques that are developed to operate on a rectangular pixel grid can be used to convert the continuous tone image into a halftone image.

separation into sub-images

In a fourth step according to a preferred embodiment of the current invention, the halftoned image is separated into mutually interstitial sub-images.

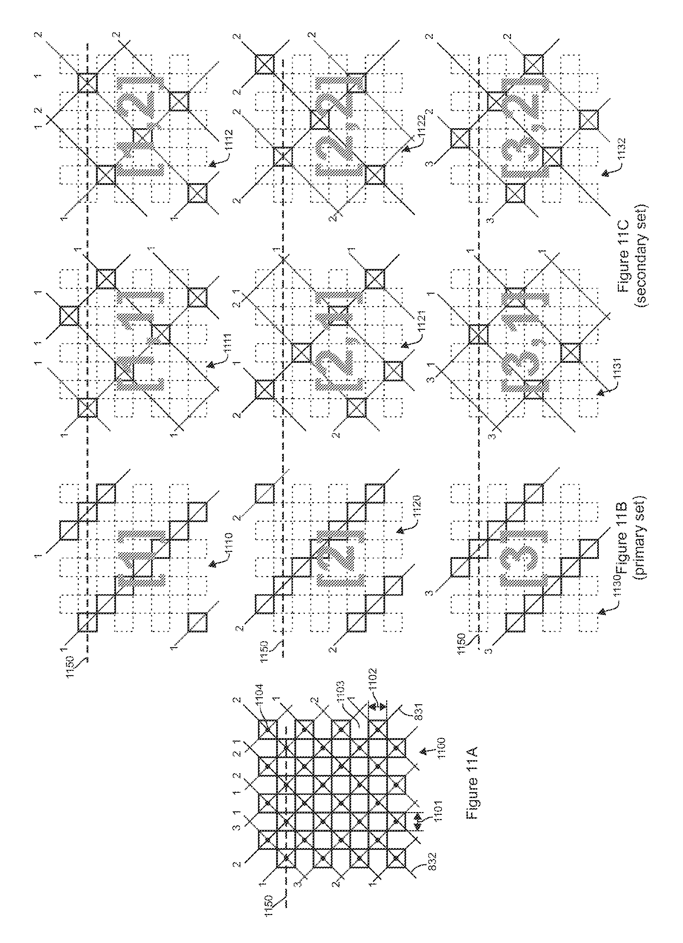

This is preferably done in two sub-steps, which are demonstrated by means of Figures 11.

In a first sub-step, the halftoned sub-sampled image is separated into a primary set of M (M>1) mutually interstitial sub-images along a first diagonal orientation.

Figure 11A shows the addressable pixel 1103 grid of the printer having a fast scan pitch 1101 and slow scan pitch 1102. The positions of the halftoned pixels of the sub-sampled image are indicated by a black dot 1104. The figure also shows a first 831 and a second 832 diagonal orientation.

Separating an original image into mutually interstitial sub-images shall mean that every pixel as a whole (including all of its color components) in the original image 1100 is selectively assigned to one of several sub-images having the same size and resolution as the original image in a way that, when said sub-images are added together, the original image is reconstructed.

Separating an image into sub-images along an orientation shall mean that a set 880, 881 of subsequent pixels 802 in an original image that lie on a line that is parallel to said orientation 831, 832 shall be assigned to the same sub-image.

In view of the above definitions, the drawings in Figure 11B can now be interpreted. In this particular case M equals three. The halftoned sub-sampled image 1100 is separated into three mutually interstitial images 1110, 1120, 1130 along a first diagonal orientation 831.

In a secondary sub-step, said sub-images 1110, 1120, 1130 obtained in the primary sub-step are further separated into a secondary set of N (N>=1) mutually interstitial images along a second diagonal orientation 832.

The drawings in Figure 11C, for example show that the separated image 1110 is further separated into sub-images 1111, 1112 along a second diagonal orientation 832.

The effect of the combining the first and the second sub-steps of step 4 is that a total of M*N sub-images are obtained. These sub-images can be indexed by means of a two-dimensional index [i,j].

For example a first index i, (1<i<=M) can refer to the index of the sub-image after the first separation sub-step. The second index j (1<=k<= N) can refer to the index of the sub-image after the second separation sub-step. Referring to the example in Figure 11, six sub-images are obtained having indices [1,1], [1,2], [2,1], [2,2], [3,1] and [3,2].

In the special case that N=1, the second sub-step can be skipped.

preferred embodiment for separation

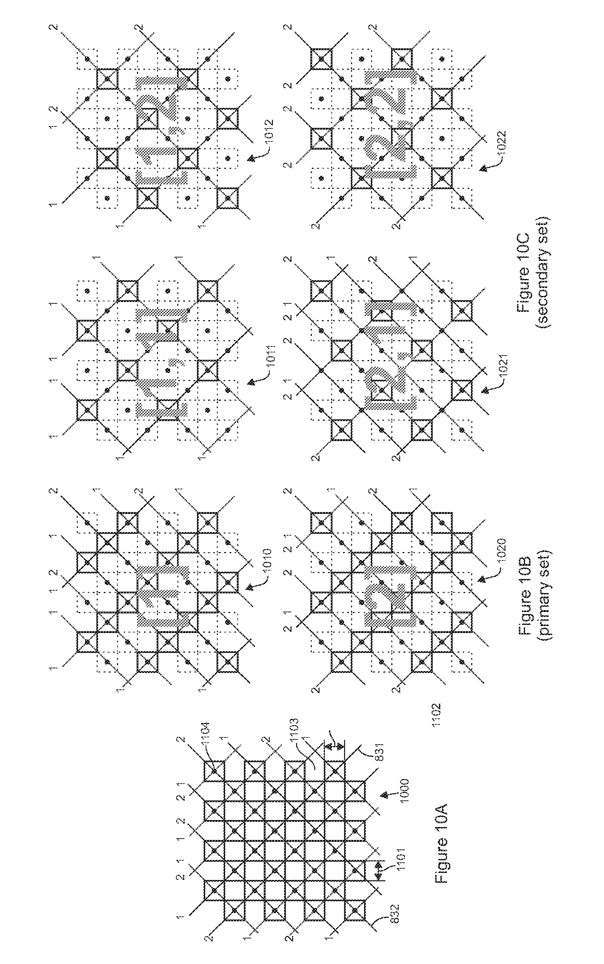

A preferred embodiment of the current invention is shown in Figure 10 wherein M equals two and N equals two. The halftoned sub-sampled image is separated into four sub-images with indices [1,1], [1,2], [2,1] and [2,2].

printing (according to first embodiment)

According to a first possible embodiment of the current invention, the order of the printing of the sub images is organized in such a way that:

- all the pixels 802 on any same line 1150 of the addressable grid belonging to a sub-image 1111, 1112, 1121, 1122, 1131, 1132 of said secondary set of sub-images are printed before the printing starts of pixels on said line 1150 of another sub-image of said secondary set.

What this comes down to is that pixels belonging to different sub-images are printed in separate passes of the print head. Since the pixels belonging to the same mutual interstitial sub-images do not touch (except when N=1), the occurrence of coalescence during the printing of said individual sub-image can be avoided.

Also, since the pixels belonging to different sub-images are printed during subsequent passes of the print head assembly, time is available for curing the pixels belonging to a first sub-image, before pixels of a subsequent sub-image are printed. This enables also to reduce the risk of coalescence between droplets of pixels belonging to different sub-images.

According to one embodiment, a forced intermediate curing step by means of an energy source is performed between the printing of sub-images to further suppress ink coalescence between droplets of pixels belonging to different sub-images. Intermediate curing shall mean the curing of a sub-image just after it has been printed.

If the curing between the printing of sub-images is only a partial curing followed by a final curing when all the sub-images have been printed, the occurrence of uneven gloss and texture can be avoided.

Referring to Figure 7, when the print head assembly 700 moves relative to the substrate in the fast scan direction 780 intermediate curing is achieved by powering a first curing source 750. When the when the print head assembly 700 moves relative to the substrate in the fast scan direction 790, intermediate curing is achieved by powering a second curing source 760.

curing (printing according to first embodiment)

According to one embodiment, a forced intermediate curing step by means of an energy source is performed between the printing of sub-images to further suppress ink coalescence between droplets of pixels belonging to different sub-images. Intermediate curing shall mean the curing of a sub-image just after it has been printed.

If the curing between the printing of sub-images is only a partial curing followed by a final curing when all the sub-images have been printed, the occurrence of uneven gloss and texture can be avoided.

Referring to Figure 7, when the print head assembly 700 moves relative to the substrate in a fast scan direction 780, intermediate curing is achieved by powering a first curing source 750. Optionally, a final curing of partially cured dots that were printed in a prior swath is achieved by powering a second curing source 760.

The arrangement shown in Figure 7 enables to print one sub-image of each color during one pass of the print head assembly.

When the when the print head assembly 700 moves relative to the substrate in a fast scan direction 790, intermediate curing is achieved by powering a second curing source 760. Optionally, a final curing of partially cured dots that were printed in a prior swath is achieved by powering a second curing source 750.

printing (according to second embodiment)

Figure 17 illustrates of a second embodiment of the current invention.

To simplify the explanation, the following explanation concentrates on the printing of the image using the print heads 1701, 1705 with cyan ink, although the printing of the image with print heads containing other inks is entirely analogue.

According to one aspect of said second embodiment, the order of the printing of the sub-images is organized in such a way that:

- all the pixels on any same line of the addressable grid belonging to at least two sub-images 1011, 1012 of said secondary set of sub-images are printed before the printing starts of pixels on said line of another at least two sub-images 1021, 1022 of said secondary set.

What this comes down to is that pixels on a line belonging to two or more different sub-images 1021, 1022 are printed in one single pass, but by different print heads 1701, 1705. Preferably said sub-images belonging to said secondary set of sub-images printed in said single pass are derived from the same sub-image belonging to said primary set of sub-images. For example, the sub-images 1011, 1012 belonging to said secondary set of sub-images are derived form the same sub-image 1010 from said primary set of sub-images.

The arrangement shown in Figure 17 enables to print two sub-images of each color during one pass of the print head assembly and therefore halves the number of passes that are required en therefore enables to achieve higher printing speeds.

A variation of the embodiment shown in Figure 17 is shown in Figure 19. In this case, a group of staggered print heads 1901, 1911 that act and behave as one single print head replaces a single print head 1701. The increased number of nozzles of a group of staggered print heads enables to print at faster speeds.

curing (printing according to second embodiment)

When the print head assembly 1700 moves relative to the substrate in a fast scan direction 1770, intermediate curing of dots printed by at least one head 1705-1708 is achieved by powering a first curing source 1751 and intermediate curing of dots printed by at least one head 1701-1704 is achieved by powering a second curing source 1750. Optionally, a final curing of partially cured dots that were printed in a prior swath is achieved by powering a third curing source 1752.

When the print head assembly 1700 moves relative to the substrate in a fast scan direction 1780, intermediate curing of dots printed by at least one head 1701-1704 is achieved by powering said second curing source 1751 and intermediate curing of dots printed by at least one head 1705-1708 is achieved by powering said third curing source 1752. Optionally, a final curing of partially cured dots that were printed in a prior swath is achieved by powering said first curing source 1750.

By using this arrangement of three curing sources 1750-1752 in combination with two sets of print heads 1701-1704, 1705-1708 coalescence of pixels belonging to different sub-images is effectively suppressed in combination with increased printing speed.

controlling the slow scan print head movement - first embodiment

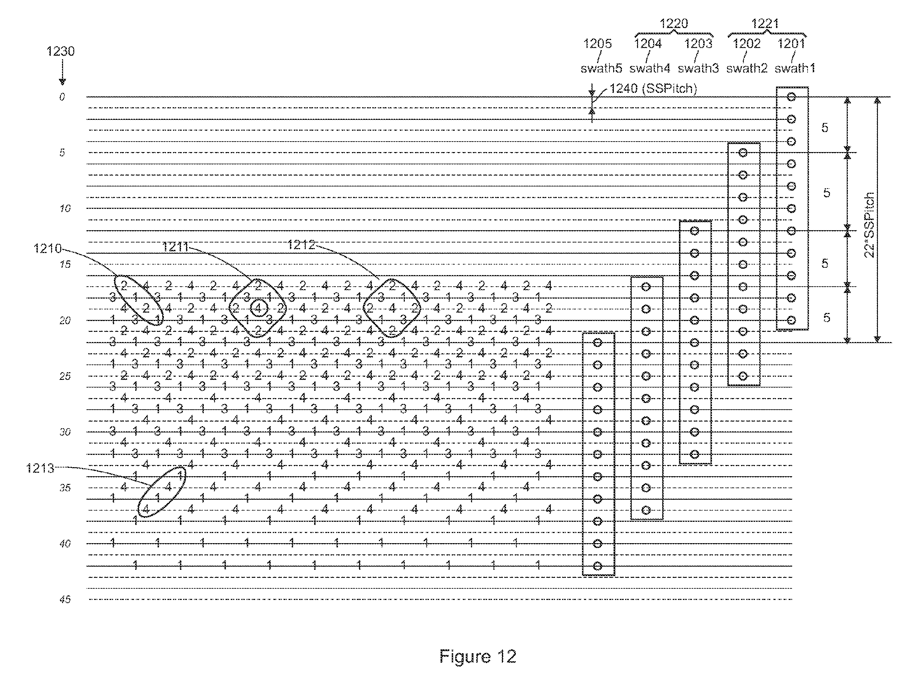

Figure 12 demonstrates a preferred embodiment to implement the invention according to a first embodiment. The case that is shown corresponds with N=M=2 as in Figure 10. In order to save space on the drawing and with reference to the drawing in Figure 11, the pixels belonging to the different sub-images are indicated as follows:

- pixels belonging to sub-image [1,1] are indicated with 1;
- pixels belonging to sub-image [1,2] are indicated with 2;
- pixels belonging to sub-image [2,1] are indicated with 3;
- pixels belonging to sub-image [2,2] are indicated with 4;

In general, a unique relation between a linear ordering scheme (1<=k<=N*M) of N*M sub-images and a two-dimensional indexing system [i,j] is easily achieved as:

$$\texttt{k = (i-1)*N+(j-1) with 1<=i<=N; 1<=j<=M;}$$

For reasons of simplicity, only one print head is shown in Figure 12 having one column with 11 nozzles. It is assumed that the slow scan pitch is half the nozzle pitch, i.e. an interlacing factor slowScanInterlacingFactor of two is used to double the resolution of the printing compared with the native resolution of the print head. To indicate the position headPosition of the print head in the slow scan direction, the position of the first nozzle (upper nozzle on Figure 12) is used on a scale 1230 expressed in the number of slow scan pitches.

The printing process works according to the following steps.

In a step 1, the position headPosition of the print head is set at 0 and a first swath is printed that prints sub-image [1,1].

In a step 2, the position headPosition of the print head is incremented by a value slowScanStep1=5 so that it becomes equal to 5, and a second swath is printed that prints sub-image [1,2]. In the overlapping zone between the two swaths, a first diagonal pattern 1210 originates.

In a step 3, the position headPosition of the print head is incremented by a value slowScanStep2=7 so that it becomes equal to 12, and a third swath is printed that prints sub-image [2,1]. In the overlapping zone between the three swaths a rhombus like pattern 1211 originates consisting of "missing pixels" of sub-image [2,2] (indicated by the circle around "4" surrounded by printed pixels from sub-images [1,1], [1,2] and [2,1]

In a step 4, the position headPosition of the print head is incremented by a value slowScanStep3=5 so that it becomes equal to 17, and a fourth swath is printed that prints sub-image [2,2]. In the overlapping zone between the four previous swaths all the pixels 1212 of the sub-images have now been printed.

In a step 5, the position headPosition of the print head is incremented by a value slowScanStep4=5 so that it becomes equal to 22 which corresponds exactly with the length of the print head plus one nozzle pitch, and a fifth swath is printed that prints continuous with printing sub-image [1,1]. In the overlapping zone between swath 4 and swath 5 a second diagonal pattern 1213 originates between pixels belonging to sub-image [1,1] and sub-image [2,2]. From here on the steps 2, 3 and 4 are repeated until the complete image is printed. According to a preferred embodiment, the swaths 1 and 3 are printed along a first fast scan orientation and the swaths 2 and 4 along the opposite fast scan orientation.

In general the principles according to Figure 12 can be generalized as follows:

If M*N=P is the number of sub-images and the slow scan interlacing factor is equal to SSIF than define slow scan steps SSS[1], SSS[2],.... SSS[P] so that:

$$SSS[1] = a[1]*SSIF + 1;$$

$$SSS[2] = a[2]*SSIF + 1;$$

$$...$$

$$SSS[P] = a[P]*SSIF + 1;$$

in which: a[1], a[2],... a[P] are integer values
so that: SSS[1] + SSS[2] + SSS[P] = headLength + SSIF;
and optionally so that: SSS[1] < headLength; SSS[2]<headLength; ...SSS [P] <headLength.

Next, initialize the position of the head along the slow scan orientation

And next again, perform a sequence (i=1,i<=P) comprising the steps of printing a sub-image and next moving the print head over a distance SSS[i]*slowScanPitch;

Repeat the above sequence until the complete image is printed.

Referring to Figure 11C, it is remarked in every sub-image 1111, 1112, 1121, 1122, 1131, and 1132 only one out of two columns contains a pixel that has to be printed. This opens up to increase the velocity of the print head by a factor of two for the same firing frequency of the print head. In general, the velocity of the print head can be increased by a factor M when printing sub-images of said secondary series of sub-images. Consequently, the overall performance of the printing system does not have to decrease as a result of reconstructing the images from sub-images.

controlling the slow scan print head movement - second embodiment

A problem may arise when using the method according to the previous embodiment. Referring to Figure 12, the orientation of the diagonal pixel structures 1210 and 1213 alternates during the printing and this, for example in combination with an intermediate curing step, may give rise to a form of banding that is correlated with the orientation of the diagonal structures.

This problem can be effectively addressed by imposing additional constraints to the values SSS[i] of the slow scan steps. More specifically, if these values are selected such that on any given line, all the pixels that belong to a first primary sub-image are printed before the printing starts of the pixels of a second primary sub-image, it was found that the orientation of the diagonals does not switch.

More generally, the above mentioned form of banding can be avoided by requiring that on any group of N consecutive lines of the addressable printer grid all the pixels belonging to a sub-image derived from a first primary sub-image are printed before the printing starts of pixels belonging to a sub-image derived from a another primary sub-image.

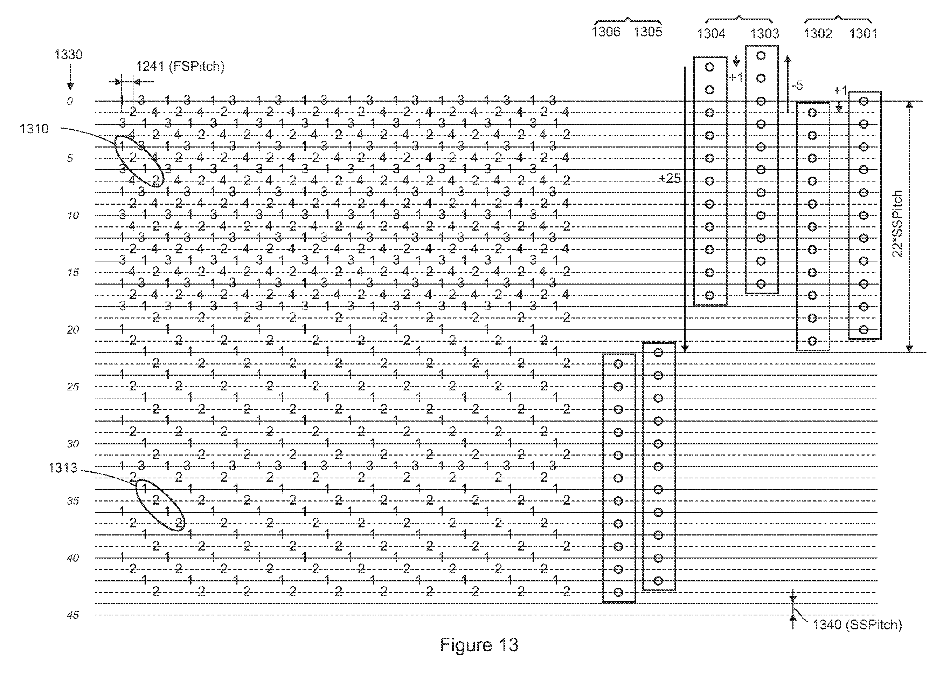

This is demonstrated by means of an example shown in Figure 13. In this example the values of SSS[i] have been selected in a way that on any two consecutive lines all the pixels of the sub-images [1,1] and [1,2] (see also Figure 10) that are derived from a first sub-image [1] in a primary set are printed before the printing starts of pixels belonging to the sub-images [2,1] and [2,2], that are derived from a second sub-image [2] in said primary set.

Referring to Figure 13, the pixels of a sub-image [1,1] and sub-image [1,2] derived from the same primary sub-image [1] are printed in two swaths 1301 and 1302 on the lines 0 to 21.

Next the pixels of the sub-image [2,1] and sub-image [2,2] derived from a primary sub-image [2] are printed in two swaths 1303 and 1304 on the lines 0 to 17.

As a result, on any of the lines 0 to 17, the pixels derived from a first primary sub-image [1] are printed before the pixels derived from a second primary sub-image [2].

The method proceeds by printing the swaths 1305 and 1306 to print pixels derived from primary sub-image [1] on the lines 22-43 and by printing (not shown on Figure 13) swaths to print pixels derived from a second primary sub-image [2] on lines 18 to 40.

In general, the method achieves that on any group of lines, the pixels derived from a first primary sub-image are printed before the pixels derived from a second primary sub-image.

A result, the orientation of diagonal pixel structures that are first cured such as 1310 and 1313 in Figure 13 does not alter, and the visibility of printing artifacts that correlated with printing different swaths is greatly reduced.

The method also retains the original objective of the de-correlating image quality artifacts by having pixels on the same line printed by different nozzles.

In one variation, the order of the swaths that print pixels derived from the same primary sub-image is reversed. For example, the order of the swaths 1303 and 1304 may be reversed.

In another variation, the grid on which pixels that belong to a primary sub-images are positioned is not defined by diagonal lines, as in Figure 8, but on a rectangular grid. An example of this is easily devised by shifting in Figure 13 the pixels on the lines having odd row numbers over one fast scan pitch fastScanPitch 1341 to the left. By doing this, pixels of the four sub images are organized on a rectangular grid of rows and columns.

### printing (according to a third embodiment)

An additional complication originates when an arrangement of print heads is used as shown in Figure 18, because of the gap 1820 that originates during the printing of a swath.

According to one aspect of the current invention, this problem is resolved by including after each slow scan step according to one of the prior embodiments an additional slow scan step ASSS.

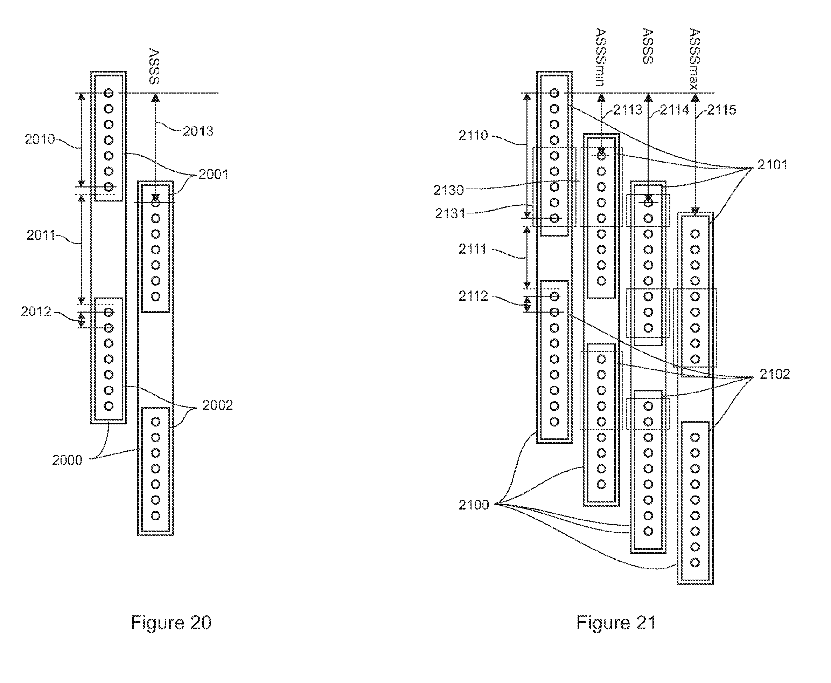

Figure 20 shows a case in which two heads 2001, 2002 together form a print head sub-assembly 2000.

The headLength 2010 is given by the following expression:

$$\texttt{headLength = (nbrNozzles -1)*NozzlePitch;}$$

In Figure 20 the gapSize 2011 is equal to:

$$\texttt{gapSize = nbrNozzles*nozzlePitch;}$$

Also in Figure 20, the additional slow scan step 2013 is given by the expression:

$$\texttt{ASSS = nbrNozzles*nozzlePitch = gapSize;}$$

Moving the print head assembly 2000 in an additional slow scan step over a distance 2013 enables to print those lines in the image that could not printed in a previous position of said print head, because they were in between the nozzles of the print head 2001 and the print head 2002.

Figure 21 shows a case in which:

$$\texttt{gapSize < nbrNozzles*nozzlePitch;}$$

The distance 2113 or 2114 or 2115 of an additional slows scan step ASSS is preferably constrained by:

$$\texttt{gapSize =< ASSS =< nbrNozzles +1}$$

In a case like in Figure 21, a nozzle redundancy problem originates, because certain lines can be printed by nozzles belonging to said print head both before and after said additional slow scan step. For example, the nozzles of print head 2101 surrounded by a dotted box 2130 in Figure 21 print after the additional slow scan step over a distance 2113 on the same lines as the nozzles of said print head 2101 surrounded by a dotted box 2131 before said slow scan step over a distance 2113.

We introduce the concept of "common lines" to indicate lines that can be printed by (different) nozzles both before and after an additional slow scan step. The positions of these lines are called common line positions.

The nozzle redundancy problem can be solved in three ways:

According to a first method, the nozzles of a print head that correspond with common line positions are switched off when the print head is in a position before an additional slow scan step. The lines on the common line positions in that case are printed by nozzles after an additional slow scan step.

The second method is essentially the complement of the first method. According to said second method, the nozzles of a print head that correspond with common line positions are switched off when the print head is in a position after an additional slow scan step. The lines on the common line positions in that case are printed by nozzles before an additional slow scan step.

According to a third method, a pixel on a common line is alternately printed by a nozzle of a print head before and after an additional slow scan step. This third method has the advantage that pixels on the same line are printed by two different nozzles and that image quality artifacts that are related with a specific nozzle are spatially diffused.

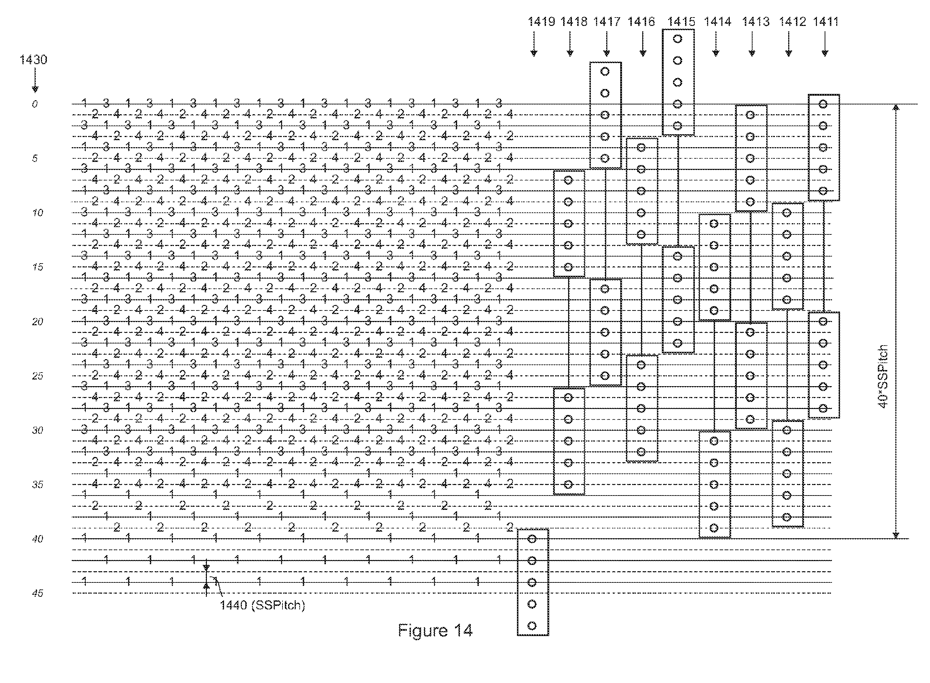

The print head configuration shown in Figure 18 in combination with the use of an additional slow scan step can be used to achieve the advantages explained by means of Figure 13 to reduce correlated banding. This is explained by means of Figure 14.

In a first step a swath 1411 prints pixels of sub-image [1,1] on the lines 0 to 8 and the lines 20 to 28. This is followed by a additional slow scan step of 10*SSPitch and a second swath 1412 to print pixels of the same sub-image [1,1] on the lines 10 to 18 and 30 to 38. The result of the swaths 1411 and 1412 is that pixels of the first sub-image are printed on the even lines having row numbers from 0 to 38.

The method proceeds by printing pixels of sub-image [1,2] in swaths 1413 and 1414 on the lines having odd row numbers 1 to 39. At that point all the pixels of the primary sub-image [1] on the lines having row numbers 0 to 40 are printed.

Next the pixels of the primary sub-image [2] are printed in a sequence of swaths 1415, 1416, 1417, 1418 on the lines having row numbers 0 to 35. The slow scan steps are selected such that on any line or group of lines the pixels of the primary sub-image [1] are printed before the pixels of the primary sub-image [2].

In one variation, the order of printing swaths of pixels that belong to the same primary sub-image is permutated. For example, the order of the swaths 1411, 1412, 1413 and 1414 is permutated.

Abstraction

Many other embodiments exist of the above invention.

Specifically mentioned is the use of the above invention in combination with monochrome printing or in combination with color printing such as printing with cyan, magenta, yellow and black inks.

Specifically mentioned also is increasing the speed of the print assembly along the fast scan orientation by a factor of N when printing sub-images of a secondary set.

Also specifically mentioned is bidirectional printing along the fast scan orientation.

Figure 7 shows an arrangement for intermediate curing comprising two curing stations and Figure 17 shows an arrangement for intermediate curing comprising three curing stations. According to the principles of the current invention even more curing stations may be used to print multiple sub-images during pass of the print head assembly.

Specifically mentioned is the use of the current invention in combination with any slow scan interstitial factor greater than 1.

Specifically mentioned is any combination of separating an image into sub-images and printing said sub-images using any one of the printing methods that are disclosed in this document using any of the arrangements of print heads and optional curing sources.

The current invention is preferably used for printing applications that are typically handled by a silk printing process, but is not limited to such applications.

In the above embodiments the addressable grid of the printer is a rectangular addressable grid of which only half the pixels are addressed. It should be clear to the person skilled in the art that this is equivalent to a printer that has a native addressable grid with pixels arranged in a checkerboard pattern.

Also part of the invention is the apparatus that uses any of the methods according to the current invention and that has the technical features as set out above.

Also part of the invention is a computer program that performs the steps according the current invention.

Also specifically included is a printed substrate that is obtained using the methods according to the current invention.

**Claims**

1. A method for reconstructing an image on a dot matrix printer, said method comprising the steps of:

   - defining a grid (800) of pixels (801) for said printer, said grid (800) having a slow scan (871) and a fast scan (870) orientation and said grid (800) comprising rows (850) of pixels (801) parallel to said fast scan orientation (870);
- obtaining a halftone pixel value for the pixels (802) of said grid, said pixels defining a halftoned image;
- separating said halftoned image into at least a first (1010) and a second (1020) mutually interstitial primary sub-images;
- separating each one of said primary sub-images (1010, 1020) into at least two mutually interstitial secondary sub-images (1011, 1012, 1021, 1022);
- printing said mutually interstitial secondary sub-images (1011, 1012, 1021, 1022);

the method being **characterized in that**:

- on any row of the addressable printer grid, the pixels that belong to said at least two secondary sub-images derived from said first primary sub-image are all printed before the printing starts on said row of pixels that belong to said at least two secondary sub-images derived from said second primary sub-image.

2. A method according to the previous claims wherein a first secondary sub-image (1011) derived from a primary sub-image (1010) is printed along a first direction along the fast scan orientation, and second secondary sub-image (1012) derived from the same primary sub-image (1010) is printed along a second direction along said fast scan orientation that is different from said first direction.

3. A method according to anyone of the previous claims further including a forced curing step between the printings of sub-images.

4. A dot matrix printing system, said system comprising:

- a data processing system (300) for generating printer commands;
- a printer controller (200) for controlling a fast scan motor (125), a substrate transport motor (113), and at least one actuator of at least one print head (122);
- a print head assembly (700) comprising at least one print head (122) for printing ink, said print head assembly (700) being mounted on a shuttle (121) that moves along a fast scan orientation (770, 780) driven by a fast scan motor (125);
- a substrate transport mechanism 110,111,112) to move a substrate (101) along a slow scan orientation (790, 791) driven by a slow scan motor (113);
- a substrate (101) having an ink receiving layer (102);

said system being **characterized by**:

- it is adapted to carry out the steps of at least one of the methods according to the claims 1 to 3.

5. A dot matrix printing system according to the previous claim, wherein said print head assembly comprises at least two print heads (1801, 1811) arranged along a common center line (1822) and separated by a gap (1820).

6. A dot matrix printing system according to anyone of the claims 4 or 5, wherein:

- said printer controller (200) is additionally capable to control at least one curing station (750, 760);
- said print head assembly (700) comprises additionally at least one curing station (750, 760).

7. A system according to anyone of the previous claims 4 to 6, wherein said dot matrix printer is an inkjet printer.

8. A system according to the previous claim, wherein said ink is a UV curable ink.

9. A data processing system set up to execute the steps of the method according to any one of the claims 1 to 3.

10. A computer program comprising computer program code means adapted to perform the steps of the method according to any one of the claims 1 to 3, when said program is executed on a computer.

11. A computer readable medium comprising program code adapted to carry out the steps of the method according to any one of the claims 1 to 3, when executed on a computer.

Figure 1

Figure 3

Figure 2

EP 1 914 668 A1

18

Figure 6

Figure 5

Figure 4

Figure 7

Figure 8

Figure 9

EP 1 914 668 A1

Figure 10A

Figure 10B
(primary set)

Figure 10C
(secondary set)

Figure 11A

Figure 11B
(primary set)

Figure 11C
(secondary set)

Figure 12

Figure 13

EP 1 914 668 A1

Figure 14

Figure 15B

Figure 15A

Figure 15D

Figure 15C

Figure 16B

Figure 16A

Figure 17

Figure 18

Figure 19

Figure 21

ASSSmax

ASSS

ASSSmin

2115
2114
2113

2101

2102

2110
2130
2131
2111
2112
2100

Figure 20

ASSS

2013
2001

2002

2010
2011
2012
2000

🌀 **European Patent Office**

**EUROPEAN SEARCH REPORT**

Application Number

EP 06 12 2346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 437 883 B1 (NISHII TERUYUKI [JP]) 20 August 2002 (2002-08-20) | 1,4,7, 9-11 | INV. G06K15/10 |
| Y | * column 7, line 56 - column 8, line 26; figure 7 * | 2,3,5,6, 8 | B41J2/21 |
| Y | US 4 748 453 A (LIN LARRY W [US] ET AL) 31 May 1988 (1988-05-31) * column 4, line 35 - line 68; figures 5a,5b * | 2 | |
| D,Y | WO 2004/002746 A (INCA DIGITAL PRINTERS LTD [GB]; VOSAHLO JINDRICH [GB]) 8 January 2004 (2004-01-08) * page 12, line 3 - page 13, line 6 * * page 25, line 32 - page 26, line 24 * * page 27, line 29 - page 30, line 27; figures 1-3 * | 3,5,6,8 | |
| D,A | US 6 092 890 A (WEN XIN [US] ET AL) 25 July 2000 (2000-07-25) * figure 2 * | 3,8 | |

TECHNICAL FIELDS SEARCHED (IPC)

G06K
B41J

The present search report has been drawn up for all claims

| Place of search | Date of completion of the search | Examiner |
|---|---|---|
| The Hague | 18 January 2007 | De Groot, Ronald |

## ANNEX TO THE EUROPEAN SEARCH REPORT
## ON EUROPEAN PATENT APPLICATION NO.

EP 06 12 2346

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2007

| Patent document cited in search report | | Publication date | Patent family member(s) | | Publication date |
|---|---|---|---|---|---|
| US 6437883 | B1 | 20-08-2002 | JP | 2000022910 A | 21-01-2000 |
| US 4748453 | A | 31-05-1988 | CA | 1296947 C | 10-03-1992 |
| | | | DE | 3886289 D1 | 27-01-1994 |
| | | | DE | 3886289 T2 | 19-05-1994 |
| | | | EP | 0300743 A2 | 25-01-1989 |
| | | | JP | 1067348 A | 14-03-1989 |
| | | | JP | 2502346 B2 | 29-05-1996 |
| WO 2004002746 | A | 08-01-2004 | AU | 2003279701 A1 | 19-01-2004 |
| | | | EP | 1519839 A1 | 06-04-2005 |
| | | | JP | 2005531438 T | 20-10-2005 |
| | | | US | 2006230969 A1 | 19-10-2006 |
| US 6092890 | A | 25-07-2000 | NONE | | |

EPO FORM P0459

For more details about this annex : see Official Journal of the European Patent Office, No. 12/82

**EP 1 914 668 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4198642 A
- US 4967203 A
- US 6679583 B
- US 6092890 A
- WO 2004002746 A